# EUROPEAN PATENT APPLICATION

(11) **EP 4 759 146 A1**
(43) Date of publication of application: **17.06.2026**
(21) Application number: 24851393.9
(22) Date of filing: 13.06.2024
(51) Int. Cl.: A23L 7/109

(54) **RAW NOODLE AND METHOD FOR PRODUCING SAME**

(30) Priority: 09.08.2023 JP 2023130254
(71) Applicant: Sanyo Foods Co., Ltd., Minato-ku, Tokyo 107-0052 (JP)
(72) Inventor: NAGAYAMA, Yoshiaki, Tokyo 107-0052 (JP)
(74) Representative: Ricker, Mathias
(86) International application number: PCT/JP2024/021483
(87) International publication number: WO 2025/032960

(57) **Abstract**

Provided is a raw noodle which enables room temperature distribution and long-term storage similar to that of instant noodles, only requires the addition of hot water to be eaten, and has excellent taste and texture. A raw noodle containing, based on the solid content, 5-35 mass% of starch and 2.5-12 mass% of at least one polyhydric alcohol compound selected from the group consisting of sugar alcohols and oligosaccharides, wherein the content of volatile components in the raw noodle is 24-30 mass%, and the water activity is 0.85-0.91.

## Description

### TECHNICAL FIELD

The present disclosure relates to raw noodles and a method for producing the same.

### BACKGROUND ART

Instant cup noodles are representative examples of noodles that become edible simply by pouring hot water on them. Instant noodles have long been valued as foodstuffs that can be easily cooked and stored for a long period. However, in recent years, consumers have been demanding authentic instant noodles. For example, in the case of instant ramen, it is desired to provide not only ease of storage and cooking, but also a more authentic texture and appearance upon consumption. Under the background of such increasingly strict consumer demands, authentic and easy-to-cook noodles alternative to instant noodles are expected.

As instant noodles that can be stored for a long period without a drying treatment, so-called long-life (LL) noodles, which are boiled noodles that are subjected to an acid treatment and additionally subjected to a retort sterilization are known. However, noodles that have been boiled once have low stiffness. In addition, because they are acid-treated, Chinese noodles, which are characterized by being alkaline, made into LL noodles may have an unnatural flavor profile. Therefore, it has been difficult to provide noodles with a satisfactory taste and texture.

Raw noodles that have not been dried and semi-raw noodles with improved preservability compared to raw noodles are known. However, raw noodles and semi-raw noodles basically need to be cooked by being boiled in a pot in order to make them edible, which lacks convenience during cooking. Furthermore, in the case of semi-raw noodles, since a treatment for reducing the water content of the noodles is performed in order to improve preservability compared to raw noodles, the boiling time during cooking becomes longer compared to raw noodles.

There are known techniques for making raw noodles and semi-raw noodles edible simply by pouring hot water on them.

PTL 1 (JP H11-28067 A) describes a method for producing raw Chinese noodles or semi-raw Chinese noodles, including preparing high-protein wheat flour with a wheat flour protein content of 15 to 18% as a main ingredient, adding and mixing 10 to 60 wt% of starch and 0.3 to 2 wt% of egg white powder to the flour, and making noodles by a conventional method.

PTL 2 (JP 2006-288340 A) describes a method for producing raw noodles, including preparing high-protein wheat flour with a protein content of 20 to 29 wt% and etherified starch as ingredient powders, adding and mixing 25 to 50 wt% of etherified starch to the ingredient powder, and making noodles by a conventional method, wherein the cross-sectional area of noodle strands is 2.8 mm² or less in noodle strand formation.

PTL 3 (JP 2005-318832 A) describes raw noodles or semi-raw noodles for hot-water rehydration containing 18 to 36 wt% of hydroxypropylated tapioca starch with a degree of etherification substitution of 0.08 to 0.15. PTL 3 also describes placing these raw noodles or semi-raw noodles for hot-water rehydration with an apparent bulk density of 0.25 to 0.45 g/cm³ into a hot-water rehydration container.

### CITATION LIST

### PATENT LITERATURE

PTL 1: JP H11-28067 A
PTL 2: JP 2006-288340 A
PTL 3: JP 2005-318832 A

### SUMMARY OF INVENTION

### TECHNICAL PROBLEM

In PTL 1 to 3, by using a large amount of starch as an ingredient for raw noodles or semi-raw noodles, the raw noodles or semi-raw noodles become edible even when heat during cooking is lower compared to boiling cooking. However, when the amount of starch added increases, the noodle-making suitability decreases. When gluten or the like is additionally added in order to improve the noodle-making suitability, it is necessary to increase the amount of water added compared with ordinary raw noodles. As a result, the water activity of the raw noodles increases, making long-term storage of the raw noodles difficult. Raw noodles are not generally distributed at room temperature, like instant noodles, but in the chilled temperature range.

Semi-raw noodles produced by adjusting the water content in cut raw noodles at a temperature of about 40°C have a relatively low water activity (generally about 0.85 to 0.90 at which many bacteria cannot exist microbiologically), and thus can be stored for a long period and distributed at room temperature. However, the production of semi-raw noodles requires installation of a dryer and a drying time, which is disadvantageous in terms of cost and energy.

An object of the present disclosure is to provide raw noodles with an excellent taste and texture that can be distributed at room temperature and stored for a long period in the same manner as instant noodles and become edible simply by pouring hot water on them.

### SOLUTION TO PROBLEM

The inventor considered it important to achieve, in raw noodles that are not subjected to a drying treatment, a water content and water activity comparable to those of semi-raw noodles that can be distributed at room temperature. Then, the inventor conducted extensive studies, and as a result, found that, in preparing a dough for raw noodles containing a relatively large amount of starch contributing to hot-water rehydration properties, when at least one polyhydric alcohol compound selected from the group consisting of sugar alcohols and oligosaccharides is added, noodle-making suitability can be secured despite a reduced amount of water added. The inventor also found that, since raw noodles produced using such a dough have a low water content and water activity, they can be distributed at room temperature and stored for a long period, become edible simply by pouring hot water on them, and have an excellent taste and texture.

The present disclosure includes the following aspects.

### [Aspect 1]

Raw noodles, including, based on a solid content thereof, 5 mass% to 35 mass% of starch, and 2.5 mass% to 12 mass% of at least one polyhydric alcohol compound selected from the group consisting of sugar alcohols and oligosaccharides, wherein the raw noodles have a volatile component content of 24 mass% to 30 mass% and a water activity of 0.85 to 0.91.

### [Aspect 2]

The raw noodles according to Aspect 1, wherein the sugar alcohols include at least one selected from the group consisting of xylitol, erythritol, sorbitol, reduced starch syrup, maltitol, lactitol, palatinit, and glycerin.

### [Aspect 3]

The raw noodles according to Aspect 1, wherein the oligosaccharides include at least one selected from the group consisting of trehalose, maltotriose, and maltosyltrehalose.

### [Aspect 4]

The raw noodles according to any one of Aspects 1 to 3, which are packaged in a packaging material together with an ethanol volatilizing agent.

### [Aspect 5]

The raw noodles according to any one of Aspects 1 to 4, further including, based on the solid content, 0.15 mass% to 1.3 mass% of at least one calcium-containing material selected from the group consisting of calcined calcium and calcium hydroxide.

### [Aspect 6]

The raw noodles according to any one of Aspects 1 to 5, wherein the ethanol content is 1 mass% to 3 mass%.

### [Aspect 7]

A method for producing raw noodles, including:
kneading noodle ingredients including 100 parts by mass of a main ingredient containing 5 mass% to 35 mass% of starch, 2.5 parts by mass to 12 parts by mass of at least one polyhydric alcohol compound selected from the group consisting of sugar alcohols and oligosaccharides, and water to obtain a dough; and
cutting raw noodles from the dough.

### [Aspect 8]

The method according to Aspect 7, wherein the sugar alcohols include at least one selected from the group consisting of xylitol, erythritol, sorbitol, reduced starch syrup, maltitol, lactitol, palatinit, and glycerin.

### [Aspect 9]

The method according to Aspect 7, wherein the oligosaccharides include at least one selected from the group consisting of trehalose, maltotriose, and maltosyltrehalose.

### [Aspect 10]

The method according to any one of Aspects 7 to 9, wherein the amount of water is 18 parts by mass to 28 parts by mass relative to 100 parts by mass of the main ingredient.

### [Aspect 11]

The method according to any one of Aspects 7 to 10, wherein the noodle ingredients further include 0.15 parts by mass to 1.3 parts by mass of at least one calcium-containing material selected from the group consisting of calcined calcium and calcium hydroxide relative to 100 parts by mass of the main ingredient.

### [Aspect 12]

The method according to any one of Aspects 7 to 11, wherein the polyhydric alcohol compound is contained in the noodle ingredients in the form of emulsified oils and fats.

### [Aspect 13]

The method according to any one of Aspects 7 to 12, further including packaging the raw noodles together with an ethanol volatilizing agent in single-serving units.

### ADVANTAGEOUS OF EFFECTS OF INVENTION

The present disclosure provides raw noodles with an excellent taste and texture that can be distributed at room temperature and stored for a long period, and become edible simply by pouring hot water on them.

The above description should not be considered as disclosing all embodiments of the present invention and all advantages of the present invention.

### DESCRIPTION OF EMBODIMENTS

Hereinafter, representative embodiments of the present invention will be described in more detail for illustrative purposes, but the present invention is not limited to these embodiments. In the following description, "parts" and "%" indicating amounts and proportions are on a mass basis unless otherwise specified.

In the present disclosure, "noodles" refers to foodstuffs which contain a powder-like ingredient such as wheat flour and starch as a main ingredient, are processed into forms such as a linear or sheet form, and become edible through cooking such as boiling, stewing, steaming, stir-frying, pouring hot water, or heating directly or after adding water in a microwave oven. Examples of noodles include udon, kishimen, Chinese noodles, ramen, soba, wonton wrappers, gyoza wrappers, shumai wrappers, pho, harusame noodles, and pasta. Examples of the state of noodles before cooking include raw noodles, semi-raw noodles, dried noodles, steamed noodles, boiled noodles, frozen noodles, and instant noodles.

In the present disclosure, "raw noodles" refers to noodles that are made into products after processing a dough into product shapes such as cutting a dough into linear forms, or stretching a dough and cutting it into circular or square shapes, and generally without subjecting the processed substance to a drying treatment using a dryer or the like.

### [Method for Producing Raw noodles]

A method for producing raw noodles according to one embodiment includes kneading noodle ingredients including 100 parts by mass of a main ingredient containing 5 mass% to 35 mass% of starch, 2.5 parts by mass to 12 parts by mass of at least one polyhydric alcohol compound selected from the group consisting of sugar alcohols and oligosaccharides, and water to obtain a dough, and cutting raw noodles from the dough. Except for these features, conventionally known processes in the field of raw noodles can be used without particular limitations.

Generally, conventional raw noodles are cooked by boiling them in hot water or by adding water and heating them in a microwave oven. In other words, when cooking raw noodles, it is necessary to continuously heat the water in which the raw noodles are immersed from the outside. In contrast, since the raw noodles of the present disclosure contain a relatively large amount of starch, they can be cooked by a hot-water rehydration operation and become edible.

According to this embodiment, when a dough is prepared using 2.5 parts by mass to 12 parts by mass of at least one polyhydric alcohol compound selected from the group consisting of sugar alcohols and oligosaccharides relative to 100 parts by mass of the main ingredient containing 5 mass% to 35 mass% of starch, a dough having excellent noodle-making suitability can be obtained even when a main ingredient containing a relatively large amount of starch is used and the amount of water added is reduced. Raw noodles produced using such a dough have a low volatile component content and water activity and can be distributed at room temperature and stored for a long period.

### <Noodle Ingredients>

As noodle ingredients for raw noodles, conventionally known main ingredients and auxiliary ingredients used for raw noodle production can be used without particular limitations. Some of the noodle ingredients, for example, wheat flour, starch, gluten, and emulsified oils and fats, are generally used in a state in which water is contained at the equilibrium water content. In the present disclosure, the content or amount of noodle ingredients used for raw noodle production is a value that includes the equilibrium water content contained in the noodle ingredients.

### (Main Ingredient)

As the main ingredient, in addition to starch, for example, cereal flours such as wheat flour, buckwheat flour, barley flour, and rice flour may be used. The cereal flours may be used alone or two or more thereof may be used in combination.

In one embodiment, the main ingredient includes wheat flour. Examples of wheat flours include ASW (Australian Standard White medium-protein wheat, a protein content of about 10 mass%), HRW (Hard Red Winter wheat from the United States, a protein content of about 11 mass%), and PH (Premium Hard wheat from Australia, a protein content of about 12 mass%). In an embodiment in which the raw noodles are provided in the form of instant cup noodles, a high protein content, for example, 11 mass% or more, is advantageous in terms of taste and texture.

Examples of starches include sweet potato starch, potato starch, tapioca starch, waxy corn starch, corn starch, and wheat starch. Etherified modified starch, esterified modified starch, crosslinked modified starch, and oxidized modified starch obtained using these starches as raw materials can also be used. The starches may be used alone or two or more thereof may be used in combination.

As the starch, tapioca starch, potato starch, and waxy corn starch, as well as their etherified modified starches and esterified modified starches, are preferable. Tapioca starch, potato starch, and waxy corn starch have a lower gelatinization initiation temperature and a larger water absorption capacity than wheat flour so that α-gelatinization is effectively promoted by the heat from pouring hot water thereon. Therefore, these starches have an advantageous effect on hot-water rehydration of raw noodles.

When tapioca starch, potato starch, or waxy corn starch is subjected to etherification or esterification, it is possible to further promote α-gelatinization when hot water is poured thereon. The method and degree of etherification and esterification treatments are not particularly limited. Examples of etherified modified starches include hydroxypropyl starch. Examples of esterified modified starches include starch acetate, starch phosphate, and starch octenyl succinate.

Starch may be crosslinked, and when moderately crosslinked starch or highly crosslinked starch is used, since α-gelatinization is less likely to proceed, raw noodles rehydrated with hot water tend to have a powdery texture caused by insufficient α-gelatinization. Therefore, when moderately crosslinked starch or highly crosslinked starch is used, it is preferable to use etherified crosslinked starch or esterified crosslinked starch that has been subjected to a processing treatment such as etherification or esterification in addition to crosslinking.

In consideration of hot-water rehydration properties, the gelatinization initiation temperature of the starch is preferably 45°C to 65°C and more preferably 48°C to 55°C. In the present disclosure, the gelatinization initiation temperature of the starch is determined through differential scanning calorimetry (DSC) under measurement conditions described in examples.

The content of the starch in the main ingredient is 5 mass% to 35 mass%, and preferably 6 mass% to 30 mass%. When the content of the starch is 5 mass% or more, it is possible to secure hot-water rehydration properties and prevent a powdery texture from occurring. When the content of the starch is 35 mass% or less, undesirable textures caused by excessive starch such as a gummy texture or stickiness of raw noodles can be avoided. The amount of the starch used can be adjusted within the above range depending on a desired noodle thickness, that is, the cross-sectional area of noodle strands. For example, in the case of thin noodles such as for tonkotsu ramen, the amount of the starch used may be small, and in the case of medium-thickness noodles and thick noodles, it is preferable to increase the amount of the starch used in order to secure hot-water rehydration properties upon consumption.

### (Polyhydric Alcohol Compound)

The polyhydric alcohol compound is at least one selected from the group consisting of sugar alcohols and oligosaccharides. When the polyhydric alcohol compound is used, it is possible to obtain a dough having excellent noodle-making suitability even when a main ingredient containing a relatively large amount of starch is used and the amount of water added is reduced. In addition, the polyhydric alcohol compound can also reduce the water activity of the raw noodles.

The sugar alcohol is not particularly limited, but preferably includes at least one selected from the group consisting of xylitol, erythritol, sorbitol, reduced starch syrup, maltitol, lactitol, palatinit, and glycerin, and more preferably includes at least one selected from the group consisting of sorbitol and reduced starch syrup. Sorbitol and reduced starch syrup are particularly advantageous because they have low sweetness and little impact on the taste of raw noodles.

Oligosaccharides are carbohydrates in which approximately 2 to 10 monosaccharide units are linked. The oligosaccharides are not particularly limited, but preferably include at least one selected from the group consisting of trehalose, maltotriose, and maltosyltrehalose, and more preferably include trehalose, which is less likely to cause browning when raw noodles are stored for a long period. It is known that maltotriose is contained as a main component of starch syrup, and maltotriose may be used in the form of starch syrup for dough preparation.

The polyhydric alcohol compound may be used in the form of emulsified oils and fats based on polyhydric alcohols. The oil and fat content in the emulsified oils and fats can be, for example, 20 mass% to 40 mass%. The oils and fats contained in the emulsified oils and fats can prevent the noodle sheet from adhering to rolls during noodle-making and can further improve noodle-making suitability.

The amount of the polyhydric alcohol compound used relative to 100 parts by mass of the main ingredient is 2.5 parts by mass to 12 parts by mass, and preferably 3 parts by mass to 11 parts by mass. When the amount of the polyhydric alcohol compound used is 2.5 parts by mass or more relative to 100 parts by mass of the main ingredient, it is possible to effectively reduce the amount of water added, and secure noodle-making suitability, and further reduce the volatile component content and water activity of the raw noodles. When the amount of the polyhydric alcohol compound used is 12 parts by mass or less relative to 100 parts by mass of the main ingredient, it is possible to prevent raw noodles from sticking together and maintain inherent taste and texture of raw noodles.

### (Ethanol)

In order to further improve preservability, ethanol may be added as a noodle ingredient. Ethanol at a concentration 60% or 70% (v/v) is available. When an ethanol preparation in which sodium lactate, a pH adjusting agent, hops, an emulsifying agent and the like are added to ethanol is used, more advanced bacteriostasis can be performed. When ethanol at a concentration of 70% (v/v) is used, it is desirable to add it in an amount of about 2 mass% to about 6 mass% of the noodle ingredients. This makes it possible to maintain about 1 mass% to about 3 mass% of ethanol in the produced raw noodles, and the raw noodles can be stored for a long period. Since production of raw noodles does not involve a drying treatment, a larger amount of ethanol can remain compared to semi-raw noodles.

### (Calcium-containing Material)

A calcium-containing material may be added to the noodle ingredients. The calcium-containing material can lower the gelatinization initiation temperature of the starch contained in the raw noodles. Therefore, even without excessively increasing the starch content of the raw noodles, a sufficient amount of α-gelatinized starch can be generated in the raw noodles with the heat from pouring hot water thereon to make the raw noodles edible. By avoiding excessive use of starch, it is possible to obtain raw noodles with an excellent taste and texture, in which a gummy texture upon consumption, and stickiness of raw noodles are minimized. The calcium-containing material can also raise the pH of raw noodles and improve storage stability.

The calcium-containing material is preferably at least one selected from the group consisting of calcined calcium and calcium hydroxide. In the present disclosure, "calcined calcium" refers to a material whose main component is calcium oxide obtained by calcining lime, seashells, eggshells and the like as raw materials, and is distinguished from calcium phosphate obtained by calcining fish bones, whey and the like as raw materials. Calcium hydroxide may be added externally or may be produced by hydration of calcined calcium by water in the noodle ingredients.

The amount of the calcium-containing material used relative to 100 parts by mass of the main ingredient is preferably 0.15 parts by mass to 1.3 parts by mass, more preferably 0.2 parts by mass to 1.0 part by mass, and still more preferably 0.3 parts by mass to 0.8 parts by mass. When the amount of the calcium-containing material used is 0.15 parts by mass or more relative to 100 parts by mass of the main ingredient, it is possible to secure hot-water rehydration properties and prevent a powdery texture from occurring. When the amount of the calcium-containing material used is 1.3 parts by mass or less relative to 100 parts by mass of the main ingredient, the taste of the raw noodles can be maintained at a level acceptable for the product.

### (Salt)

A salt may be added to the noodle ingredients. The salt is not only related to the taste, but also has a water activity-reducing effect and a bacteriostatic effect. The salt can lower the water activity by about 0.008 per 1 mass% of addition, and exhibits a particularly strong water activity-reducing effect.

The amount of the salt used relative to 100 parts by mass of the main ingredient is preferably 0.5 parts by mass to 3 parts by mass, and more preferably 1.5 parts by mass to 2.5 parts by mass. When the amount of the salt used is 0.5 parts by mass or more relative to 100 parts by mass of the main ingredient, it is possible to effectively reduce the water activity. When the amount of the salt used is 3 parts by mass or less relative to 100 parts by mass of the main ingredient, it is possible to prevent the raw noodles from having an excessively strong salty taste.

### (Other Auxiliary Ingredients)

The noodle ingredients may further contain other auxiliary ingredients. Examples of auxiliary ingredients include brine, phosphate, eggs, gluten, glycine, and milt proteins. Glycine and milt proteins function as bacteriostatic agents or preservation agents.

### <Preparation of Dough>

A dough (noodle dough) can be obtained by kneading a main ingredient containing starch, a polyhydric alcohol compound, water, and as necessary, other auxiliary ingredients such as ethanol, a calcium-containing material, a salt, brine, and gluten, using a mixing device such as a kneader or a planetary mixer. Powder-like auxiliary ingredients such as gluten may be mixed with the main ingredient in advance. A salt, brine and the like may be dissolved in water in advance.

The amount of water added to the main ingredient (also referred to as "amount of water added" in the present disclosure) is preferably adjusted so that noodle-making suitability is obtained, the volatile component content of the raw noodles is 24 mass% to 30 mass%, and the water activity is 0.85 to 0.91. The amount of water added depends on the addition amounts of the main ingredient and auxiliary ingredients used, and is preferably 18 parts by mass to 28 parts by mass and more preferably 20 parts by mass to 25 parts by mass relative to 100 parts by mass of the main ingredient. When the amount of water added is 18 parts by mass or more relative to 100 parts by mass of the main ingredient, it is possible to secure noodle-making suitability. When the amount of water added is 28 parts by mass or less relative to 100 parts by mass of the main ingredient, the volatile component content and water activity of the raw noodles can be maintained in a range advantageous for long-term storage.

### <Cutting of Raw noodles>

Linear raw noodles can be formed by continuously cutting a thinly stretched noodle sheet obtained by rolling the dough using, for example, a noodle strand cutting device. A dense noodle sheet may be obtained by passing the dough through an extrusion molding machine, and this noodle sheet can be used for raw noodle cutting. The noodle sheet can be cut into a square shape or circular shape to form raw noodles. The width of the linear raw noodles can be, for example, 1 mm to 10 mm. The thickness of the raw noodles can be, for example, 0.5 mm to 10 mm. Generally, the linear raw noodles can be cut into serving sizes in a subsequent process.

### <Dusting Flour>

Raw noodles may be coated with dusting flour, and it is preferable to apply dusting flour. The dusting flour is not particularly limited, and common noodle-making dusting flours, for example, raw starches or processed starches, can be used. Examples of raw starches include corn starch, potato starch, tapioca starch, and sago starch. Examples of processed starches include those obtained by subjecting these raw starches to an acid treatment or a crosslinking treatment. Processed starches can reduce the adhesiveness of raw noodles and improve the viscosity or turbidity of hot water added upon consumption. Corn starch, sago starch, and processed starches thereof are preferably used because they are less sticky. As the dusting flour, dried starch from which water contained in the starch has been removed by drying may be used. The dusting flour can prevent adhesion between raw noodles during transportation or long-term storage, and also promote loosening of the raw noodles upon consumption. Generally, the dusting flour is applied to the surface of the linearly cut raw noodles, and the raw noodles are then cut into serving sizes. When raw noodles with a low water activity, for example, raw noodles with a water activity of 0.89 or less immediately after noodle making, are produced, adhesion between raw noodles is less likely to occur, and thus dusting flour does not need to be used.

### <Packaging>

Raw noodles may be packaged in single-serving units. Raw noodles are preferably packaged in a packaging material together with an ethanol volatilizing agent. When the raw noodles are packaged in a packaging material together with an ethanol volatilizing agent, the interior of the packaging can be filled with ethanol gas, thereby preventing spoilage of the raw noodles, and enabling long-term storage, for example, an expiration date of 3 months or longer.

Examples of ethanol volatilizing agents include silica ethanol (silica gel with ethanol adsorbed thereon).

The packaging material used for packaging is not particularly limited, but is preferably a packaging material with high barrier properties against ethanol gas, more preferably a film having a single-layer OPP (oriented polypropylene) structure, or a laminate structure such as OPP/PE (oriented polypropylene/polyethylene), NY/PE (nylon/polyethylene), OPP/CPP (oriented polypropylene/cast polypropylene),or KOP/PE (polyvinylidene chloride-coated polypropylene/polyethylene), and having an ethanol gas permeability of 10 g/(m²·24 hr) or less at 40°C, and still more preferably a film having an ethanol gas permeability of 5 g/(m²·24 hr) or less at 40°C.

### [Raw Noodles]

In one embodiment, raw noodles contain, based on a solid content thereof, 5 mass% to 35 mass% of starch, and 2.5 mass% to 12 mass% of at least one polyhydric alcohol compound selected from the group consisting of sugar alcohols and oligosaccharides. The volatile component content of the raw noodles is 24 mass% to 30 mass%, and the water activity is 0.85 to 0.91. In the present disclosure, the volatile component content and water activity of the raw noodles are values measured according to procedures described in examples. The solid content of the raw noodles is a value calculated according to the mass of raw noodles × (100 - volatile component content (%))/100. Water contained in noodle ingredients used for raw noodle production, such as wheat flour, starch, gluten, and emulsified oils and fats, is generally evaporated when the volatile component content is measured, and is therefore not included in the solid content. The raw noodles of this embodiment can be distributed at room temperature and stored for a long period. The volatile component content of the raw noodles is preferably 25 mass% to 29 mass%. The water activity of the raw noodles is preferably 0.86 to 0.90.

When the starch content of the raw noodles is 5 mass% or more, it is possible to secure hot-water rehydration properties and prevent a powdery texture from occurring. When the starch content of the raw noodles is 35 mass% or less, undesirable textures caused by excessive starch, such as gummy texture, and stickiness of raw noodles, can be avoided, The starch content of the raw noodles based on the solid content is preferably 6 mass% to 30 mass%. The starch content of the raw noodles does not include starch derived from cereal flour contained in the main ingredient.

When the content of the polyhydric alcohol compound in the raw noodles is 2.5 mass% or more, it is possible to further reduce the water activity of the raw noodles. When the content of the polyhydric alcohol compound in the raw noodles is 12 mass% or less, it is possible to prevent raw noodles from sticking together and maintain inherent taste and texture of raw noodles. The content of the polyhydric alcohol compound in the raw noodles based on the solid content is preferably 2.8 mass% to 11 mass%.

The starch, sugar alcohols and oligosaccharides are as described in the method for producing raw noodles.

It is preferable that the raw noodles be packaged in a packaging material together with an ethanol volatilizing agent.

In one embodiment, raw noodles further contain, based on the solid content, 0.15 mass% to 1.3 mass% of at least one calcium-containing material selected from the group consisting of calcined calcium and calcium hydroxide. When the content of the calcium-containing material in the raw noodles is 0.15 mass% or more, it is possible to secure hot-water rehydration properties and prevent a powdery texture from occurring. When the content of the calcium-containing material in the raw noodles is 1.3 mass% or less, the taste of the raw noodles can be maintained at a level acceptable for the product. The content of the calcium-containing material in the raw noodles based on the solid content is preferably 0.2 mass% to 1.0 mass%, and more preferably 0.3 mass% to 0.8 mass%.

The calcium-containing material is as described in the method for producing raw noodles.

The ethanol content of the raw noodles is preferably 1 mass% to 3 mass%. This enables the raw noodles to be stored for a longer period of time.

The pH of the raw noodles immediately after production is preferably 9 or more, more preferably 9.5 or more, and still more preferably 10 or more. The pH of the raw noodles immediately after production is preferably 11.5 or less, more preferably 11.2 or less, and still more preferably 11 or less. In some embodiments, the pH of the raw noodles immediately after production is preferably 9 to 11.5, more preferably 9.5 to 11.2, and still more preferably 10 to 11. When the pH of the raw noodles immediately after production is 9 or more, an alkaline flavor which is characteristic in ramen and the like can be imparted to the raw noodles. When the pH of the raw noodles immediately after production is 11.5 or less, undesirable odors caused by excessive alkalinity can be reduced. The pH of raw noodles is a value obtained by adding 90 mL of distilled water to 10 g of raw noodles, stirring the mixture for 5 minutes using a stomacher, allowing the obtained suspension to stand, then collecting a supernatant liquid as a sample, and performing measurement using a pH/ion meter HM-42X (commercially available from DKK-TOA Corporation) at a temperature of 25 ± 0.3°C. "Immediately after production" means within 24 hours after the raw noodles are produced.

Raw noodles that are packaged or not packaged may be filled into various containers such as cups or bags. In one embodiment, the raw noodles are provided as a cup-type foodstuff filled into a cup. In this embodiment, the raw noodles may be packaged or may be directly filled into a container such as a PP container without packaging. The raw noodles of the present disclosure can be consumed by a hot-water rehydration operation, but the cooking method is not limited thereto. For example, the raw noodles of the present disclosure may be cooked by boiling them in hot water or by adding water and heating them in a microwave oven. In such cases, the heating time can be shortened compared to conventional methods. The raw noodles of the present disclosure may be consumed after water used for hot-water rehydration is discarded after the hot-water rehydration operation and hot water is poured again. This makes it possible to serve the soup at a higher temperature upon consumption, and to reduce the odor of ethanol.

### EXAMPLES

Hereinafter, the present invention will be described in more detail with reference to examples, comparative examples and reference examples, but the present invention is not limited to these examples.

### <Noodle-making Suitability>

The noodle-making suitability was evaluated on the following four levels.
A: The noodle sheets were very well bonded.
B: The noodle sheets were well bonded.
C: Some noodle sheets were poorly bonded, resulting in a slight decrease in yield.
D: The noodle sheets were not bonded or most of the noodle sheets were poorly bonded, resulting in a significant decrease in yield.

### <Volatile Component Content>

The obtained raw noodles were pulverized, and 2 g of the obtained pulverized product was dried at 135°C for 2 hours using a forced convection, constant temperature drying oven (product name DKN602, commercially available from Yamato Scientific Co., Ltd.). The volatile component content was determined from the difference in mass before and after drying. The volatile component content was the value (%) obtained by dividing the total mass of water and other volatile components such as ethanol contained in the raw noodles that evaporated under the above conditions by the mass of the raw noodles before drying.

### <Water Activity>

The obtained dough or raw noodles were finely chopped and filled into a dedicated tray for a water activity measuring instrument (product name AquaLab TDL 2, commercially available from Decagon), and the water activity was measured according to ISO 18787: 2017. In Comparative Example 5, since the dough was not bonded well and clean raw noodles were not formed, the water activity was measured in a dough state.

### <Taste and Texture>

Raw noodles (100 g) removed from the packaging material were put into a polystyrene foam (PSP) cup having a draft water capacity of 400 mL. Hot water at 100°C was poured into the PSP cup up to the water line, the cup was quickly covered with an aluminum foil and left for 3 minutes. Immediately thereafter, the hot water was discarded, hot water at 100°C was poured again up to the water line, the noodle strands were then quickly loosened, and the taste and texture were evaluated. The time was measured using a stopwatch (product name Seiko stopwatch S052, commercially available from Seiko S-Yard Co., Ltd.).

### <General Viable Bacteria Count>

10 g of a sample was put into a sterile filter bag, and 90 g of a sterile phosphate-buffered saline was added to prepare a sample stock solution (10x). The sample stock solution (10x) was then treated with a stomacher for 1 minute. 1 mL of the sample stock solution (10x) was put into a 15 mL tube containing 9 mL of a sterile phosphate-buffered saline and stirred to prepare a sample diluent (100x). 1 mL of the sample diluent (100x) was inoculated onto a petrifilm AC, a spreader was placed thereon, and the sample was allowed to stand for about 1 minute. The petrifilm was put into an incubator, and culture was performed under specified culture conditions (35°C, 24 hours) for the AC plate. After culturing, the colonies were counted and the average value was calculated. This average value was multiplied by the dilution factor to obtain a general viable bacteria count (CFU/g). The case where no colonies were detected is expressed as "< 100 CFU/g."

### <Coliform Bacteria Count>

10 g of a sample was put into a sterile filter bag, and 90 g of a sterile phosphate-buffered saline was added to prepare a sample stock solution (10x). The sample stock solution (10x) was then treated with a stomacher for 1 minute. 1 mL of the sample stock solution (10x) was inoculated onto a petrifilm CC, a spreader was placed thereon, and the sample was allowed to stand for about 1 minute. The petrifilm was put into an incubator, and culture was performed under specified culture conditions (35°C, 24 hours) for the CC plate. After culturing, the colonies were counted and the average value was calculated. This average value was multiplied by the dilution factor to obtain a coliform bacteria count (CFU/g). The case where no colonies were detected is expressed as "< 10 CFU/g" (indicating negative).

### <Mold and Yeast Count>

10 g of a sample was put into a sterile filter bag, and 90 g of a sterile phosphate-buffered saline was added to prepare a sample stock solution (10x). The sample stock solution (10x) was then treated with a stomacher for 1 minute. 0.2 mL of the sample stock solution (10x) was inoculated onto an M40Y medium. The medium was put into an incubator, and culture was performed under specified culture conditions (25°C, 7 days) for the M40Y medium. After culturing, the colonies were counted and the average value was calculated. This average value was multiplied by the dilution factor to obtain a mold and yeast count (CFU/g). The case where no colonies were detected is expressed as "< 50 CFU/g" (indicating negative).

### Comparative Example 1 to Comparative Example 5

The following test was performed to investigate the noodle-making suitability of raw noodles containing starch. A dough was obtained by kneading a mixture obtained by adding water in an amount shown in Table 1 to 2.1 kg of wheat flour (a protein content of 11.5%), 0.9 kg of etherified tapioca starch, 90 g of gluten, 15 g of calcined shell calcium, 30 g of egg white powder, 6 g of gardenia pigment, 150 g of an ethanol preparation at a concentration of 70% (v/v), 60 g of a salt, and 24 g of brine (potassium carbonate). The dough was rolled by a conventional method to form a noodle sheet, the noodle sheet was cut out using a No. 20 square cutter, and thereby raw noodles having a noodle thickness of 1.5 mm were obtained.

Table 1 shows the dough state, the noodle-making suitability, the volatile component content, and the water activity of Comparative Example 1 to Comparative Example 5.

### [Table 1]

**Table 1**

| | Amount of water added | | Dough state | Noodle-making suitability | Volatile component content (mass%) | Water activity (AW) |
|---|---|---|---|---|---|---|
| | (g) | (parts by mass)¹⁾ | | | | |
| Comparative Example 1 | 1150 | 38.3 | The water content is high, the tactile feeling is moist, with mass. | A | 37.1 | 0.9428 |
| Comparative Example 2 | 1050 | 35.0 | The water content is high, the tactile feeling is moist and the size of the mass is small. | A | 35.9 | 0.9389 |
| Comparative Example 3 | 930 | 31.0 | A slightly low water content is perceived, and the tactile feeling is smooth. | B | 33.6 | 0.9282 |
| Comparative Example 4 | 775 | 25.8 | The water content is very low and the tactile feeling is smooth. | C | 31.4 | 0.9213 |
| Comparative Example 5 | 660 | 22.0 | The water content is very low and the tactile feeling is smooth. | D | 29.7 | 0.9027 |

| | | | | | | |
|---|---|---|---|---|---|---|
| 1) Value relative to 100 parts by mass of main ingredient (total amount of wheat flour and etherified tapioca starch) | | | | | | |

When the amount of water added decreased, the water activity was reduced, but at the same time, the noodle-making suitability also decreased. In raw noodles that did not undergo a drying treatment after noodle making, in order to achieve a water activity of 0.85 to 0.91, it was necessary for the dough to have noodle-making suitability with a reduced amount of water added.

### Example 1 to Example 4

Raw noodles were obtained in the same procedure as in Comparative Example 1 except that reduced starch syrup (70 mass% aqueous solution), sorbitol (70 mass% aqueous solution), starch syrup (70 mass% aqueous solution, containing 50 mass% or more of maltotriose as a main component) or trehalose was added as a polyhydric alcohol compound in an amount of 10 parts by mass (Examples 1 to 3) or 7 parts by mass (Example 4) relative to 100 parts by mass of the main ingredient (a total amount of wheat flour and etherified tapioca starch), and the amount of water added was 660 g (22.0 parts by mass relative to 100 parts by mass of the main ingredient, Examples 1 to 3) or 750 g (25.0 parts by mass relative to 100 parts by mass of the main ingredient, Example 4).

Table 2 shows the dough state, the noodle-making suitability, the volatile component content, and the water activity of Example 1 to Example 4.

### [Table 2]

**Table 2**

| | Polyhydric alcohol compound | Dough state | Noodle-making suitability | Volatile component content (mass%) | Water activity (AW) |
|---|---|---|---|---|---|
| Example 1 | Reduced starch syrup | The tactile feeling is moist and the size of the mass is small. | A | 29.1 | 0.8969 |
| Example 2 | Sorbitol | The tactile feeling is moist and the size of the mass is small. | A | 29.0 | 0.8946 |
| Example 3 | Starch syrup (main component: maltotriose) | The tactile feeling is moist and the size of the mass is small. | A | 28.8 | 0.9009 |
| Example 4 | Trehalose | The tactile feeling is moist and the size of the mass is small. | A | 29.6 | 0.9069 |

When the polyhydric alcohol compound was added, the noodle-making suitability was improved despite the reduced amount of water added and raw noodles could be produced.

### Example 5 to Example 8, Comparative Example 6 and Comparative Example 7

Raw noodles were obtained in the same procedure as in Comparative Example 5 (the amount of water added: 660 g, 22.0 parts by mass relative to 100 parts by mass of the main ingredient) except that the amount of reduced starch syrup (70 mass% aqueous solution) added was changed as shown in Table 3.

Table 3 shows the noodle-making suitability, the calculated amount of water added, the volatile component content, and the water activity of Example 5 to Example 8, Comparative Example 6 and Comparative Example 7. The calculated amount of water added is a value obtained by adding water (30 mass%) contained in the reduced starch syrup to 660 g of the amount of water added.

### [Table 3]

**Table 3**

| | Reduced starch syrup | | Noodle-making suitability | Calculated amount of water added (g) | Volatile component content (mass%) | Water activity (AW) |
|---|---|---|---|---|---|---|
| | Addition amount (parts by mass)¹⁾ | In terms of solid content (parts by mass)¹⁾ | | | | |
| Comparative Example 6 | 3 | 2.1 | D | 687 | 28.6 | 0.9076 |
| Example 5 | 5 | 3.5 | B | 705 | 28.5 | 0.9066 |
| Example 6 | 7 | 4.9 | B | 723 | 28.8 | 0.9065 |
| Example 7 | 10 | 7.0 | A | 750 | 29.1 | 0.8946 |
| Example 8 | 13 | 9.1 | A | 777 | 29.0 | 0.8980 |
| Comparative Example 7 | 20 | 14.0 | A | 867 | 29.7 | 0.8949 |

| | | | | | | |
|---|---|---|---|---|---|---|
| 1) Value relative to 100 parts by mass of main ingredient (total amount of wheat flour and etherified tapioca starch) | | | | | | |

When 2.5 parts by mass or more of reduced starch syrup was added as a polyhydric alcohol compound relative to 100 parts by mass of the main ingredient, it was possible to improve the noodle-making suitability. The calculated amount of water added was at the same level as the amount of water added in Comparative Example 4 or Comparative Example 5, and it can be understood that the noodle-making suitability of a dough having a low volatile component content was improved when the polyhydric alcohol compound was added. In addition, the water activities of Example 5 to Example 8 were lower than those of Comparative Example 4 and Comparative Example 5. In Comparative Example 7, both the noodle-making suitability and the water activity were good, but the raw noodles were too soft, and much sticking was observed.

### Example 9 to Example 11, Comparative Example 8 and Comparative Example 9

Raw noodles were obtained in the same procedure as in Comparative Example 5 (the amount of water added: 660 g, 22.0 parts by mass relative to 100 parts by mass of the main ingredient) except that the addition amount of emulsified oils and fats (product name Super Frenzy KMG, a polyhydric alcohol compound content of 64 mass%, commercially available from Riken Vitamin Co., Ltd.) obtained by dispersing a liquid oil in a polyhydric alcohol compound such as reduced starch syrup or sorbitol as a substrate was changed as shown in Table 4.

Table 4 shows the noodle-making suitability, the volatile component content, and the water activity of Example 9 to Example 11, Comparative Example 8 and Comparative Example 9. Table 4 also shows the amount of emulsified oils and fats added and the amount of the polyhydric alcohol compound added, calculated from the polyhydric alcohol compound content.

### [Table 4]

**Table 4**

| | Amount of emulsified oils and fats added (parts by mass)¹⁾ | (Amount of polyhydric alcohol compound added) (parts by mass)¹⁾ | Noodle-making suitability | Volatile component content (mass%) | Water activity (AW) |
|---|---|---|---|---|---|
| Comparative Example 8 | 3 | 1.9 | D | 28.8 | 0.9063 |
| Example 9 | 5 | 3.2 | B | 27.8 | 0.9035 |
| Example 10 | 10 | 6.4 | A | 28.7 | 0.9001 |
| Example 11 | 15 | 9.6 | A | 28.0 | 0.9006 |
| Comparative Example 9 | 20 | 12.8 | A | 28.9 | 0.8962 |

| | | | | | |
|---|---|---|---|---|---|
| 1) Value relative to 100 parts by mass of main ingredient (total amount of wheat flour and etherified tapioca starch) | | | | | |

Even if the polyhydric alcohol compound was used in the form of emulsified oils and fats, the noodle-making suitability was improved, and the water activity could be reduced. The oils and fats contained in the emulsified oils and fats made it possible to obtain a non-sticky dough. Therefore, even if the amount of the polyhydric alcohol compound added was small, the noodle-making suitability was significantly improved. In Comparative Example 9, both the noodle-making suitability and the water activity were good, but the raw noodles were too soft, and much sticking was observed.

### Reference Example 1 and Reference Example 2

The following test was performed to investigate the influence of calcined calcium on the hot-water rehydration of raw noodles. To 2.1 kg of wheat flour (a protein content of 11.5 mass%), 0.9 kg of etherified tapioca starch, 90 g of gluten, 30 g of egg white powder, 6 g of gardenia pigment, 150 g of an ethanol preparation at a concentration of 70% (v/v), 60 g of a salt, and 30 g of brine (a mixture of potassium carbonate and sodium metaphosphate), 15 g of calcined shell calcium (0.5 parts by mass relative to 100 parts by mass of the main ingredient (a total amount of wheat flour and etherified tapioca starch)) was added in Reference Example 2, and not added in Reference Example 1. 25 parts by mass (750 g) of water was added relative to 100 parts by mass of the main ingredient (a total amount of wheat flour and etherified tapioca starch), and the obtained mixture was kneaded to obtain a dough. The dough was rolled by a conventional method to form a noodle sheet, the noodle sheet was cut out using a No. 20 square cutter, and thereby raw noodles having a noodle thickness of 1.5 mm were obtained. The raw noodles were cut into single-serving units (100 g), filled into an OPP/PE packaging material, and filled simultaneously with 2 g of an ethanol volatilizing agent for packaging.

Table 5 shows the taste and texture evaluation results of Reference Example 1 and Reference Example 2.

### [Table 5]

**Table 5**

| | Addition of calcined calcium | Taste and texture |
|---|---|---|
| Reference Example 1 | No | Texture is slightly sticky, and a powdery texture is perceived. The surface of noodle strands is slightly slippery, as if partially boiled and dissolved. |
| Reference Example 2 | Yes | Good taste and texture, and good feeling of cooking. |

When calcined calcium was added, the taste and texture were improved.

### <DSC Measurement>

Reference Example 1 and Reference Example 2 were subjected to differential scanning calorimetry (DSC). Measurement conditions are as follows.
Device: DSC-60 (commercially available from Shimadzu Corporation)
Reference: 20 µL of water
Initiation temperature: 30°C
Target temperature: 110°C
Heating rate: 10°C/min
Atmosphere: air

Table 6 shows the DSC measurement results.

### [Table 6]

**Table 6**

| | Addition of calcined calcium | Endothermic initiation temperature (°C) | Endothermic end temperature (°C) | Heat (J/g) |
|---|---|---|---|---|
| Reference Example 1 | No | 53.19 | 82.90 | -5.56 |
| Reference Example 2 | Yes | 44.09 | 80.28 | -7.07 |

When calcined calcium was added, the endothermic initiation temperature significantly decreased. This means that the gelatinization initiation temperature of the raw noodles decreased, and the gelatinization of the raw noodles started earlier and proceeded quickly when hot water was poured. Therefore, it is considered that good taste and texture were obtained only with the heat from pouring hot water thereon.

### Reference Example 3 to Reference Example 9

Raw noodles were obtained in the same procedure as in Reference Example 2 except that the amount of calcined shell calcium added was changed as shown in Table 7.

Table 7 shows the taste and texture evaluation results of Reference Example 3 to Reference Example 9.

### [Table 7]

**Table 7**

| | Amount of calcined calcium added (parts by mass)¹⁾ | Taste and texture |
|---|---|---|
| Reference Example 3 | 0.1 | Powdery. Good color. |
| Reference Example 4 | 0.2 | Slight powdery texture and good feeling of cooking. Good color. |
| Reference Example 5 | 0.5 | No powdery texture and good feeling of cooking. Good color. |
| Reference Example 6 | 0.7 | No powdery texture and good feeling of cooking. Good color. |
| Reference Example 7 | 1.0 | No powdery texture and good feeling of cooking. Good color. Slight bitterness is perceived. |
| Reference Example 8 | 1.3 | No powdery texture and good feeling of cooking. Bitterness is perceived, but it is within an acceptable range. |
| Reference Example 9 | 1.5 | No powdery texture and good feeling of cooking. Bitterness is perceived. |

| | | |
|---|---|---|
| 1) Value relative to 100 parts by mass of main ingredient (total amount of wheat flour and etherified tapioca starch) | | |

When the amount of calcined calcium added increased, the texture was improved, but bitterness derived from calcined calcium was gradually perceived as the addition amount increased.

### Comparative Example 10

Raw noodles were obtained in the same procedure as in Reference Example 1 except that 1.8 kg of wheat flour and 1.2 kg of etherified tapioca starch were used, the starch content in the main ingredient was 40 mass%, 28 parts by mass (840 g) of water relative to 100 parts by mass of the main ingredient was added, and the obtained mixture was kneaded to obtain a dough. The amount of water added was adjusted so that the dough having a hardness comparable to that of Reference Example 1 was obtained.

### Comparative Example 11

Raw noodles were obtained in the same procedure as in Reference Example 1 except that 1.5 kg of wheat flour and 1.5 kg of etherified tapioca starch were used, the starch content in the main ingredient was 50 mass%, 31 parts by mass (930 g) of water relative to 100 parts by mass of the main ingredient was added, and the obtained mixture was kneaded to obtain a dough. The amount of water added was adjusted so that the dough having a hardness comparable to that of Reference Example 1 was obtained.

Table 8 shows the taste and texture evaluation results of Comparative Example 10 and Comparative Example 11.

### [Table 8]

**Table 8**

| | Starch content in main ingredient (mass%) | Amount of water added (parts by mass)¹⁾ | Taste and texture |
|---|---|---|---|
| Comparative Example 10 | 40 | 28 | Soft and a gummy texture. A taste of starch is perceived. |
| Comparative Example 11 | 50 | 31 | Noodle strands are sticky, and noodle strands adhere to each other. A taste of starch is perceived. |

| | | | |
|---|---|---|---|
| 1) Value relative to 100 parts by mass of main ingredient (total amount of wheat flour and etherified tapioca starch) | | | |

When the starch content was increased in order to lower the gelatinization initiation temperature of the raw noodles, a powdery texture caused by insufficient α-gelatinization disappeared, but undesirable textures caused by excessive starch, such as gummy texture, and stickiness of raw noodles occurred. Since the amount of water added increased as the starch content increased, it was expected that the water activity of the raw noodles also increased and the storage stability correspondingly decreased.

When calcined calcium was added, it was possible to obtain raw noodles that become edible with a hot-water rehydration operation, exhibited no powdery texture, and had an excellent taste and texture, without excessively increasing the starch content.

### Example 12 and Example 13

The following test was performed to evaluate storage stability of raw noodles. A dough was obtained by kneading a mixture containing 2.1 kg of wheat flour (a protein content of 11.5 mass%), 0.9 kg of etherified phosphate-crosslinked tapioca starch, 90 g of gluten, 15 g of calcined shell calcium, 150 g of an ethanol preparation at a concentration of 70% (v/v), 60 g of a salt, 30 g of brine (a mixture of potassium carbonate and sodium metaphosphate), 300 g of emulsified oils and fats (product name Super Frenzy KMG, a polyhydric alcohol compound content of 64 mass%, commercially available from Riken Vitamin Co., Ltd.), 30 g of egg white powder, 6 g of gardenia pigment, 3 g of an antioxidant, and 750 g of water (25 parts by mass relative to 100 parts by mass of the main ingredient (a total amount of wheat flour and etherified phosphate-crosslinked tapioca starch)). The dough was rolled by a conventional method to form a noodle sheet, the noodle sheet was cut out using a No. 20 square cutter, and thereby raw noodles having a noodle thickness of 1.5 mm were obtained. The raw noodles were cut into single-serving units (100 g), filled into an OPP packaging material (Example 12) or an NY/PE packaging material (Example 13), and filled simultaneously with 2 g of an ethanol volatilizing agent for packaging. The packaged raw noodles were stored at room temperature until four months had elapsed.

Table 9 shows the general viable bacteria count, the coliform bacteria count, the mold and yeast count, and the water activity of Example 12 and Example 13.

### [Table 9]

**Table 9**

| | Packaging material | Evaluation items | First day | 3 days after | 1 month after | 2 months after | 3 months after | 4 months after |
|---|---|---|---|---|---|---|---|---|
| Example 12 | OPP packaging material | General viable bacteria count (CFU/g) | <100 | <100 | <100 | <100 | <100 | <100 |
| | | Coliform bacteria count (CFU/g) | <10 | <10 | <10 | <10 | <10 | <10 |
| | | Mold and yeast count (CFU/g) | <50 | <50 | <50 | <50 | <50 | <50 |
| | | Water activity (AW) | 0.8955 | 0.8845 | 0.8754 | 0.8827 | 0.8830 | 0.8806 |
| Example 13 | NY/PE packaging material | General viable bacteria count (CFU/g) | <100 | <100 | <100 | <100 | <100 | <100 |
| | | Coliform bacteria count (CFU/g) | <10 | <10 | <10 | <10 | <10 | <10 |
| | | Mold and yeast count (CFU/g) | <50 | <50 | <50 | <50 | <50 | <50 |
| | | Water activity (AW) | 0.8955 | 0.8818 | 0.8710 | 0.8783 | 0.8718 | 0.8714 |

The water activity of the packaged raw noodles was highest immediately after packaging. Since the OPP packaging material having a low water vapor permeability exhibited a higher water activity, it was thought that evaporation of water and ethanol affected the water activity.

### Example 14

A dough was obtained by kneading a mixture containing 2.4 kg of wheat flour (a protein content of 11.5 mass%), 0.6 kg of etherified phosphate-crosslinked tapioca starch, 90 g of gluten, 18 g of calcined shell calcium, 150 g of an ethanol preparation at a concentration of 70% (v/v), 60 g of a salt, 30 g of brine (a mixture of potassium carbonate, sodium metaphosphate, and sodium dihydrogen phosphate), 300 g of emulsified oils and fats (product name Super Frenzy KMG, a polyhydric alcohol compound content of 64 mass%, commercially available from Riken Vitamin Co., Ltd.), 15 g of gardenia pigment, and 700 g of water (23.3 parts by mass relative to 100 parts by mass of the main ingredient (a total amount of wheat flour and etherified phosphate-crosslinked tapioca starch)). The dough was rolled by a conventional method to form a noodle sheet, the noodle sheet was cut out using a No. 16 square cutter, and thereby raw noodles having a noodle thickness of 1.6 mm for Sapporo miso ramen were obtained. The raw noodles were cut into single-serving units (100 g), filled into an OPP/CPP packaging material, and filled simultaneously with 2 g of an ethanol volatilizing agent for packaging. Seven days after production of the raw noodles of Example 14, the volatile component content was 28 mass%, and the water activity was 0.8825.

Table 10 shows the evaluation result of the taste and texture when the product was left at room temperature for 1 week after packaging. In the evaluation of taste and texture, the sample was left for 2 minutes after hot water was poured, immediately thereafter, the hot water was discarded, and hot water at 100°C was poured again up to the water line.

### Example 15

A dough was obtained by kneading a mixture containing 2.8 kg of wheat flour (a protein content of 11.5 mass%), 0.2 kg of etherified phosphate-crosslinked tapioca starch, 150 g of gluten, 15 g of calcined shell calcium, 150 g of an ethanol preparation at a concentration of 70% (v/v), 60 g of a salt, 30 g of brine (a mixture of potassium carbonate and sodium metaphosphate), 300 g of emulsified oils and fats (Super Frenzy KMG, a polyhydric alcohol compound content of 64 mass%, commercially available from Riken Vitamin Co., Ltd.), and 620 g of water (20.7 parts by mass relative to 100 parts by mass of the main ingredient (a total amount of wheat flour and etherified phosphate-crosslinked tapioca starch)). The dough was rolled by a conventional method to form a noodle sheet, the noodle sheet was cut out using a No. 24 square cutter, and thereby raw noodles having a noodle thickness of 1.3 mm for Hakata tonkotsu ramen were obtained. The raw noodles were cut into single-serving units (100 g), filled into an OPP/CPP packaging material, and filled simultaneously with 2 g of an ethanol volatilizing agent for packaging. Seven days after production of the raw noodles of Example 15, the volatile component content was 26 mass%, and the water activity was 0.8790.

Table 10 shows the evaluation result of the taste and texture when the product was left at room temperature for 1 week after packaging. In the evaluation of taste and texture, the sample was left for 90 seconds after hot water was poured, immediately thereafter, the hot water was discarded, and hot water at 100°C was poured again up to the water line.

### Example 16

A dough was obtained by kneading a mixture containing 2.1 kg of wheat flour (a protein content of 11.5 mass%), 0.9 kg of etherified potato starch, 90 g of gluten, 18 g of calcined shell calcium, 150 g of an ethanol preparation at a concentration of 70% (v/v), 60 g of a salt, 30 g of brine (a mixture of potassium carbonate and sodium metaphosphate), 210 g of trehalose, 6 g of gardenia pigment, and 750 g of water (25 parts by mass relative to 100 parts by mass of the main ingredient (a total amount of wheat flour and etherified potato starch)). The dough was rolled by a conventional method to form a noodle sheet, the noodle sheet was cut out using a No. 20 square cutter, and thereby raw noodles having a noodle thickness of 1.45 mm for Tokyo shoyu ramen were obtained. The raw noodles were cut into single-serving units (100 g), filled into an OPP/CPP packaging material, and packaged. Seven days after production of the raw noodles of Example 16, the volatile component content was 29 mass%, and the water activity was 0.8921.

Table 10 shows the evaluation result of the taste and texture when the product was left at room temperature for 1 week after packaging. In the evaluation of taste and texture, the sample was left for 3 minutes and 30 seconds after hot water was poured up to the water line, and consumption was performed directly.

### Example 17

A dough was obtained by kneading a mixture containing 2.4 kg of wheat flour (a protein content of 11.5 mass%), 0.6 kg of etherified phosphate-crosslinked tapioca starch, 90 g of gluten, 15 g of calcined shell calcium, 160 g of an ethanol preparation at a concentration of 70% (v/v), 60 g of a salt, 30 g of brine (a mixture of potassium carbonate and sodium metaphosphate), 300 g of emulsified oils and fats (product name Super Frenzy KMG, a polyhydric alcohol compound content of 64 mass%, commercially available from Riken Vitamin Co., Ltd.), 9 g of egg white powder, 6 g of gardenia pigment, and 630 g of water (21 parts by mass relative to 100 parts by mass of the main ingredient (a total amount of wheat flour and etherified phosphate-crosslinked tapioca starch)). The dough was rolled by a conventional method to form a noodle sheet, the noodle sheet was cut out using a No. 20 square cutter, and thereby raw noodles having a noodle thickness of 1.5 mm for Tokyo shoyu ramen were obtained. The raw noodles were cut into single-serving units (100 g), filled into an OPP/CPP packaging material, and filled simultaneously with 2 g of an ethanol volatilizing agent for packaging. Seven days after production of the raw noodles of Example 17, the volatile component content was 28 mass%, and the water activity was 0.8770.

Table 10 shows the evaluation result of the taste and texture when the product was left at room temperature for 3 months after packaging. In the evaluation of taste and texture, the sample was left for 2 minutes and 30 seconds after hot water was poured, immediately thereafter, the hot water was discarded, and hot water at 100°C was poured again up to the water line.

### [Table 10]

**Table 10**

| | Taste and texture |
|---|---|
| Example 14 | Stiff and chewy texture typical of miso ramen. Good texture. |
| Example 15 | Powdery texture typical of tonkotsu ramen, yet stiff. Good texture. |
| Example 16 | Resilient and stiff texture typical of shoyu ramen. Good texture. |
| Example 17 | No spoilage even after 3 months of storage at room temperature, and good taste and texture. |

### Example 18 (Thick Noodles)

A dough was obtained by kneading a mixture containing 2.1 kg of wheat flour (a protein content of 11.0 mass%), 0.9 kg of etherified tapioca starch, 90 g of gluten, 15 g of calcined shell calcium, 200 g of an ethanol preparation at a concentration of 70% (v/v), 60 g of a salt, 30 g of brine (a mixture of potassium carbonate, sodium carbonate, and sodium metaphosphate), 6 g of egg white, 300 g of emulsified oils and fats (product name Super Frenzy KMG, a polyhydric alcohol compound content of 64 mass%, commercially available from Riken Vitamin Co., Ltd.), 12 g of gardenia pigment, 1.5 g of an antioxidant, and 720 g of water (24.0 parts by mass relative to 100 parts by mass of the main ingredient (a total amount of wheat flour and etherified tapioca starch)). The dough was rolled by a conventional method to form a noodle sheet, the noodle sheet was cut out using a No. 14 square cutter, and thereby curly and thick raw noodles having a noodle thickness of 1.60 mm for miso ramen were obtained (the cross-sectional area of the noodle strands was about 3.4 mm²). The raw noodles were cut into single-serving units (100 g), 2 g of dusting flour (oxidized sago starch) was applied as uniformly as possible, and the noodles were then filled into an OPP/CPP packaging material and packaged. The water activity of the raw noodles of Example 18 immediately after production was 0.8897. Seven days after production, the volatile component content was 29.4 mass% (the ethanol content of the noodle strands was 2.02 mass%), the water activity was 0.8858, and the pH was 11.1.

Table 11 shows the evaluation result of the taste and texture when the product was left at room temperature for 1 week after packaging. In the evaluation of taste and texture, the sample was left for 3 minutes after hot water was poured up to the water line, immediately thereafter, the hot water was discarded, and hot water at 100°C was poured again up to the water line.

### Comparative Example 12 (Thick Noodles, High Starch Content)

Raw noodles were obtained under the same conditions as in Example 18 except that 1.8 kg of wheat flour and 1.2 kg of etherified tapioca starch were used. The amount of water added was the same as in Example 18.

### Example 19 (Thin Noodle)

A dough was obtained by kneading a mixture containing 2.70 kg of wheat flour (a protein content of 11.0 mass%), 0.30 kg of etherified phosphate-crosslinked tapioca starch, 90 g of gluten, 15 g of calcined shell calcium, 200 g of an ethanol preparation at a concentration of 70% (v/v), 60 g of a salt, 18 g of brine (a mixture of sodium carbonate, sodium metaphosphate, and trisodium phosphate), 6 g of egg white, 270 g of emulsified oils and fats (product name Super Frenzy KMG, a polyhydric alcohol compound content of 64 mass%, commercially available from Riken Vitamin Co., Ltd.), 1.5 g of an antioxidant, and 650 g of water (21.7 parts by mass relative to 100 parts by mass of the main ingredient (a total amount of wheat flour and etherified phosphate-crosslinked tapioca starch)). The dough was rolled by a conventional method to form a noodle sheet, the noodle sheet was cut out using a No. 26 square cutter, and thereby thin and straight raw noodles having a noodle thickness of 1.30 mm (the cross-sectional area of the noodle strands was about 1.5 mm²) for tonkotsu ramen were obtained. The raw noodles were cut into single-serving units (100 g), 2 g of dusting flour (oxidized sago starch) was applied as uniformly as possible, or without applying dusting flour, and the noodles were filled into a transparent vapor-deposited PET/CPP packaging material and packaged. The water activity of the raw noodles of Example 19 immediately after production was 0.8910. Seven days after production, the volatile component content was 28.3 mass% (the ethanol content of the noodle strands was 2.11 mass%), the water activity was 0.8895, and the pH was 10.9.

Table 11 shows the evaluation result of the taste and texture when the product was left at room temperature for 1 week after packaging. In the evaluation of taste and texture, the sample was left for 90 seconds after hot water was poured up to the water line, immediately thereafter, the hot water was discarded, and hot water at 100°C was poured again up to the water line.

### Comparative Example 13 (Thin Noodle, Low Starch Content)

Raw noodles were obtained under the same conditions as in Example 19 except that 2.88 kg of wheat flour and 0.12 kg of etherified phosphate-crosslinked tapioca starch were used.

Table 11 shows the starch content, the cross-sectional area of the noodle strands, and the taste and texture of Examples 18 and 19, and Comparative Examples 12 and 13.

### [Table 11]

**Table 11**

| | Starch content in main ingredient (mass%) | Cross-sectional area of noodle strands (mm²) | Taste and texture |
|---|---|---|---|
| Example 18 | 30 | 3.4 | Stiff, and good taste and texture. |
| Comparative Example 12 | 40 | 3.4 | Soft, and a texture caused by starch is perceived. |
| Example 19 | 10 | 1.5 | Stiff, and good taste and texture. |
| Comparative Example 13 | 4 | 1.5 | Hot-water rehydration is poor, and the texture is raw-like. |
| | | | Sticky and a powdery texture is perceived. |

When the starch content was adjusted, a good taste could be obtained.

Table 12 shows the change in the degree of sticking of noodle strands over time when dusting flour was used or when it was not used in Example 19. The degree of sticking of noodle strands was confirmed by the degree of looseness of the noodle strands upon consumption. When the noodle strands were lightly loosened with chopsticks upon consumption, the case where all noodle strands were easily loosened was evaluated as "no sticking," and the case where some noodle strands formed a mass and not all noodles strands were loosened was evaluated as "sticking observed."

### [Table 12]

**Table 12**

| | Immediately after production | 7 days after | 1 month after |
|---|---|---|---|
| With dusting flour | No noodle strand sticking | No noodle strand sticking | No noodle strand sticking |
| Without dusting flour | No noodle strand sticking | Sticking observed | Sticking observed |

When dusting flour was used, it was possible to prevent the noodle strands from sticking together over a long period.

### INDUSTRIAL APPLICABILITY

The method for producing raw noodles and the raw noodles of the present disclosure can be suitably used for foodstuffs that become edible with a hot-water rehydration operation.

## Claims

1. Raw noodles, comprising, based on a solid content thereof, 5 mass% to 35 mass% of starch, and 2.5 mass% to 12 mass% of at least one polyhydric alcohol compound selected from the group consisting of sugar alcohols and oligosaccharides,
wherein the raw noodles have a volatile component content of 24 mass% to 30 mass% and a water activity of 0.85 to 0.91.

2. The raw noodles according to claim 1, wherein the sugar alcohols include at least one selected from the group consisting of xylitol, erythritol, sorbitol, reduced starch syrup, maltitol, lactitol, palatinit, and glycerin.

3. The raw noodles according to claim 1, wherein the oligosaccharides include at least one selected from the group consisting of trehalose, maltotriose, and maltosyltrehalose.

4. The raw noodles according to any one of claims 1 to 3, which are packaged in a packaging material together with an ethanol volatilizing agent.

5. The raw noodles according to any one of claims 1 to 3, further comprising, based on the solid content, 0.15 mass% to 1.3 mass% of at least one calcium-containing material selected from the group consisting of calcined calcium and calcium hydroxide.

6. The raw noodles according to any one of claims 1 to 3, wherein the ethanol content is 1 mass% to 3 mass%.

7. A method for producing raw noodles, comprising:
kneading noodle ingredients comprising 100 parts by mass of a main ingredient containing 5 mass% to 35 mass% of starch, 2.5 parts by mass to 12 parts by mass of at least one polyhydric alcohol compound selected from the group consisting of sugar alcohols and oligosaccharides, and water to obtain a dough; and
cutting raw noodles from the dough.

8. The method according to claim 7, wherein the sugar alcohols include at least one selected from the group consisting of xylitol, erythritol, sorbitol, reduced starch syrup, maltitol, lactitol, palatinit, and glycerin.

9. The method according to claim 7, wherein the oligosaccharides include at least one selected from the group consisting of trehalose, maltotriose, and maltosyltrehalose.

10. The method according to any one of claims 7 to 9, wherein the amount of water is 18 parts by mass to 28 parts by mass relative to 100 parts by mass of the main ingredient.

11. The method according to any one of claims 7 to 9, wherein the noodle ingredients further include 0.15 parts by mass to 1.3 parts by mass of at least one calcium-containing material selected from the group consisting of calcined calcium and calcium hydroxide relative to 100 parts by mass of the main ingredient.

12. The method according to any one of claims 7 to 9, wherein the polyhydric alcohol compound is contained in the noodle ingredients in the form of emulsified oils and fats.

13. The method according to any one of claims 7 to 9, further comprising packaging the raw noodles together with an ethanol volatilizing agent in single-serving units.
